# EUROPÄISCHE PATENTSCHRIFT

(11) **EP 1 319 240 B1**
(45) Veröffentlichungstag und Bekanntmachung des Hinweises auf die Patenterteilung: **28.02.2007**
(21) Anmeldenummer: 01972051.5
(22) Anmeldetag: 12.09.2001
(51) Int. Cl.: H01K 1/28, H01K 1/14

(54) **STRAHLUNGSQUELLE UND BESTRAHLUNGSANORDNUNG**
RADIATION SOURCE AND DEVICE
SOURCE ET DISPOSITIF DE RAYONNEMENT

(30) Priorität: 18.09.2000 DE 10046161; 19.10.2000 DE 10051905
(43) Veröffentlichungstag der Anmeldung: 18.06.2003
(73) Patentinhaber: Advanced Photonics Technologies AG, 83052 Bruckmühl-Heufeld (DE)
(72) Erfinder: GAUS, Rainer, 83703 Gmund (DE); BÄR, Kai, K., O., 83043 Bad Aibling (DE); GESELL, Günther, 83071 Stephanskirchen (DE); BERGE, Torsten, 81827 München (DE)
(74) Vertreter: Heinze, Ekkehard
(86) Internationale Anmeldenummer: PCT/EP2001/010539
(87) Internationale Veröffentlichungsnummer: WO 2002/023590

(56) Entgegenhaltungen:
- EP-A- 0 187 998
- EP-A- 0 954 012
- EP-A- 0 999 724
- WO-A-99/42774
- DE-A- 19 736 462
- DE-U- 29 702 002
- GB-A- 2 282 482
- US-A- 4 287 554
- US-A- 5 600 205

## Beschreibung

Die Erfindung betrifft eine Strahlungsquelle nach dem Oberbegriff des Anspruchs 1 sowie eine mit einer solchen Strahlungsquelle aufgebaute Bestrahlungsanordnung.

Aus früheren Patentanmeldungen der Anmelderin, so etwa der DE 197 36 462 A1, WO 99/42774 oder P 10024731.8 (unveröffentlicht), sind Verfahren zur Behandlung von Oberflächen, Bearbeitung von Materialien und Herstellung von Verbundwerkstoffen unter Einsatz von elektromagnetischer Strahlung bekannt, deren wesentlicher Wirkanteil im Bereich des nahen Infrarot, insbesondere im Wellenlängenbereich zwischen 0,8 µm und 1,5 µm, liegt. Bei einer Reihe dieser Anwendungen ist die Realisierung einer relativ breiten Bestrahlungszone im Interesse einer hohen Produktivität des jeweiligen Verfahrens wesentlich. Es ist daher der Einsatz einer langgestreckten Halogenlampe, die einen röhrenförmigen, an den Enden gesockelten Glaskörper mit mindes-tens einer Glühwendel hat, mit einem langgestreckten Reflektor als Strahlungsquelle bekannt.

Bei bekannten Strahlungsquellen bzw. Bestrahlungsvorrichtungen mit langgestreckten, beidseitig gesockelten Lampen - beispielsweise für medizinische oder lichttechnische Anwendungen - haben die Lampen Anschlüsse bzw. Sockel, die koaxial zum Glaskörper an dessen Enden angeordnet sind; vgl. etwa die US 4,287,554 oder DE 33 178 12 A1. Diese Druckschriften beschreiben im übrigen Bestrahlungsanordnungen mit mehreren Strahlungsquellen, die parallel nebeneinander angeordnet sind.

Mit einer solchen Strahlungsquelle läßt sich eine breite Bestrahlungszone mit über ihre Breite annähernd konstanter Strahlungsflußdichte realisieren, die wiederum über die entsprechende Breite des Arbeitsbereiches einheitliche Prozeßbedingungen schafft. Allerdings fällt an den Enden der Halogenlampe, also in der Nachbarschaft der Sockel, die Strahlungsflußdichte ab, so daß in diesen Bereichen andere Werte der Prozeßparameter gelten. Diese Bereiche sind daher bei Anwendungen, bei denen es auf eine konstante Strahlungsflußdichte über die gesamte Produktbreite ankommt, im Prinzip nicht nutzbar, so daß die prozeßtechnisch nutzbare Breite der Bestrahlungszone kleiner als die Länge der Strahlungsquelle ist.

Bestimmte großtechnische Prozesse, die mit Strahlung im Bereich des nahen Infrarot ("NIR-Strahlung") durchgeführt werden können, lassen sich grundsätzlich mit sehr großen Materialbreiten durchführen. Die Einzelanfertigung entsprechender, sehr langer Halogenlampen stößt aber auf technische Schwierigkeiten und ist höchst kostenaufwendig. Es wäre daher für diese Prozesse erstrebenswert, mehrere langgestreckte Halogenlampen in Standardlängen in deren Längsrichtung aneinander zu reihen, um so die Längen der entsprechenden Bestrahlungszonen zu summieren. Hier wirkt sich aber das oben erwähnte Problem des Abfalls der Strahlungsflußdichte an den sockelnahen Enden der Glaskörper der einzelnen Halogenlampen besonders gravierend aus. Mit den derzeitigen Strahlungsquellen-Konstruktionen ist eine solche Bestrahlungsanordnung daher für Anwendungen, bei denen es kritisch auf die Konstanz der Strahlungsflußdichte über die gesamte Breite des Arbeitsbereiches ankommt, nicht realisierbar.

Der Erfindung liegt daher die Aufgabe zugrunde, eine verbesserte Strahlungsquelle der gattungsgemäßen Art anzugeben, die die Erzeugung einer Bestrahlungszone mit einer im wesentlichen der Länge der Strahlungsquelle entsprechenden Breite erlaubt, über die die Strahlungsflußdichte im wesentlichen konstant ist.

Diese Aufgabe wird durch eine Strahlungsquelle mit den Merkmalen des Anspruchs 1 gelöst.

Die Erfindung schließt einerseits den grundlegenden Gedanken ein, die Lampenenden, über deren Länge naturgemäß keine Strahlung emittiert werden kann, - bezogen auf das zu bearbeitende Material bzw. Halbfabrikat - hinter den Glaskörper mit einer Glühwendel zu verlegen, über die NIR-Strahlung abgegeben wird. Weiterhin schließt die Erfindung den Gedanken ein, diese Nach-Hinten-Verlegung der Enden bzw. Anschlüsse durch eine Umbiegung des Glaskörpers im endnahen Bereich zu verwirklichen.

Desweiteren gehört zur Erfindung der Gedanke, die Glühwendel oder (bei Vorhandensein mehrerer Glühwendeln in dem Glaskörper) mindestens eine Glühwendel in dem erwähnten endnahen Bereich verdickt auszuführen, damit dort relativ mehr Strahlungsenergie im NIR-Bereich imitiert wird. Hierdurch wird dem trotz des Nach-Hinten-Verlegens der Enden zu erwartenden Abfall der Strahlungsflußdichte an den umgebogenen Enden des Glaskörpers entgegengewirkt. Der Grad der Verdickung bzw. Verdichtung der Glühwendel ist in Abhängigkeit von der konkreten Gestalt bzw. dem Radius der Umbiegung des Glaskörpers zu bestimmen - was im konstruktiven Ermessen des Fachmanns liegt und wozu im übrigen Vergleichsversuche mit verschiedenen Mustern hinreichende Anhaltspunkte geben können.

In einer wegen ihrer Einfachheit bevorzugten Ausführung ist mindestens ein Ende der Halogenlampe im Bezug auf deren Längserstreckung über einen Krümmungsradius im wesentlichen rechteckig umgebogen. Hierbei verlaufen also die Lampenanschlüsse grundsätzlich im rechten Winkel zur Längserstreckung des Glaskörpers und der Glühwendel, womit sich auf einfache Weise eine Reihung der Lampenanschlüsse von hintereinander angeordneten Halogenlampen realisieren läßt.

In einer hierzu alternativen Ausführung weist mindestens ein Ende der Halogenlampe einen Bereich C-förmiger Biegung auf, derart, daß der äußerste Punkt des diesem Ende zugeordneten Sockels gegenüber dem äußersten Punkt des Glaskörpers an diesem Ende geringfügig nach Innen versetzt ist. Es ist auch die Ausführung von Halogenlampen möglich, deren Glaskörper an einem Ende diese letztgenannte Geometrie aufweist, während am anderen Ende die oben erwähnte rechtwinklige Umbiegung realisiert ist. Die letztgenannte Ausführung ermöglicht (wenn auch mit etwas höherem Konstruktionsaufwand bezüglich der Halogenlampe) in noch verbesserter Weise die "nahtlose" Aneinanderreihung von Strahlungsquellen zur Realisierung eines sehr breiten Bestrahlungsfeldes mit nahezu völlig konstanter Strahlungsflußdichte, da hierbei für die Stromzuführung zu den Lampensockeln mehr Platz zur Verfügung steht.

Die Enden der Halogenlampe sind zweckmäßigerweise in wärmeleitendem Kontakt mit dem Reflektor angeordnet und/oder den Sockeln sind Kühlmittel zur Wärmeabführung zugeordnet. Hierdurch wird ein steiler Temperatur(T)-Gradient zwischen den gebogenen Bereichen des Glaskörpers und dem jeweils benachbarten Anschlußbereich realisierbar. Hierdurch wird insbesondere ein Temperaturabfall von einer oberhalb von 600°C liegenden Temperatur des Glaskörpers auf eine Anschluß- bzw. Endtemperatur deutlich unterhalb von 300°C, speziell unterhalb von 200°C, erzeugt und der thermischen Empfindlichkeit der Lampenenden Rechnung getragen.

Die erwähnten Kühlmittel umfassen in einer ersten speziellen Ausführung Wärmeabstrahlungsflächen ("Flags") an den Enden der Lampe. Zusätzlich oder alternativ hierzu sind Steckkontakt-Sokkel mit speziellen Wärmeleitmitteln zur Wärmeabführung an den (in der Regel im wesentlichen vollständig metallischen und daher die Wärme sehr gut ableitenden) Reflektor vorgesehen.

Noch effizienter, wenn auch verfahrenstechnisch aufwendiger, ist der Einsatz eines unter Druck stehenden Kühlfluids zur Abführung der Wärme von den Lampenenden. Hierzu umfassen die Kühlmittel Kühlfluid-Strömungskanäle zur Zuleitung des Kühlfluids zu den Enden bzw. endnahen Bereichen der Halogenlampe und/oder den diesen benachbarten Bereichen des zugeordneten Reflektors.

Speziell ist im Reflektor mindestens ein Preßluft-Strömungskanal mit auf die Enden der Halogenlampe gerichteten Austrittsöffnungen ("Düsen") vorgesehen, über den kalte Druckluft - oder auch ein anderes Kühlgas - in diese Bereiche zugeführt wird. In einer bevorzugten Ausführungsform dieses Gedankens ist eine Mehrzahl von Preßluft-Strömungskanälen im Reflektor vorgesehen, die jeweils derart angeordnete und ausgebildete Austrittsöffnungen aufweisen, daß die zugeführte Druckluft (Preßluft) um die Enden bzw. endnahen Bereiche des Glaskörpers verwirbelt wird. Diese turbulente Strömung gewährleistet eine zuverlässige Abführung der Wärme von allen zu kühlenden Oberflächenbereichen.

Eine weitere bevorzugte Ausführung hat Wasserkanäle im Reflektor, die sockelnahe Bereiche desselben durchqueren. Durch diese Wasserkanäle wird Kühlwasser geleitet, das einerseits zur Kühlung des (der Strahlung der Glühwendel direkt ausgesetzten) Reflektors und andererseits - mittelbar über die Wärmeleitung zwischen Reflektor und Lampenenden - auch zur Kühlung der Lampenenden dient.

Eine besonders vorteilhafte Art und Weise der Wärmeabführung ermöglichen Reflektoren, die als massive Strangpreßprofile aus einem Material mit hoher Wärmeleitfähigkeit, insbesondere Aluminium oder einer Aluminiumlegierung, ausgeführt sind. In derartige Reflektoren sind nämlich die Kühlfluid-Strömungskanäle (sowohl in der Ausführung als Preßluftkanäle als auch in der Ausführung als Wasserkanäle) besonders leicht einarbeitbar, und die massive Ausführung des Reflektors verleiht diesem eine hohe Wärmekapazität und trägt damit zur Vergleichmäßigung der Wärmeabstrahlung durch die Strahlungsquelle auch bei geringfügigen Inhomogenitäten des primären Strahlungsprofils der Glühwendel bzw. bei geringfügigen Schwankungen der Versorgungsspannung bei.

Ein derartiges Reflektorprofil mit besonders vorteilhaften Reflexionseigenschaften, die zu einer langen Lebensdauer der Halogenlampe beitragen, sowie mit einer besonders leichten Handhabbarkeit in einem modular aufgebauten Bestrahlungssystem hat eine im Querschnitt im wesentlichen rechteckige Au-ßenkontur und eine im Querschnitt im wesentlichen W-förmige Reflektorfläche, wobei insbesondere zwei oder drei Kühlfluid-Strömungskanäle im Fußbereich zwischen dem "W" und der rechteckigen Außenkontur eingearbeitet sind.

Eine Bestrahlungsanordnung unter Einsatz der erfindungsgemäßen Lösung umfaßt eine Mehrzahl von Strahlungsquellen der vorgeschlagenen Art, von denen mindestens zwei auf einer Linie hintereinander angeordnet sind. Hierbei ist die Strahlungsflußdichte über die gesamte Längserstreckung der aneinandergereihten Strahlungsquellen zwischen den voneinander abgewandten äußersten Punkten der ersten und letzten gereihten Strahlungsquelle im wesentlichen konstant. Eine vorteilhafte Realisierung eines Gesamt-Kühlsystems ergibt sich in einer zweckmäßigen Ausführung, bei der die Kühlfluid-Strömungskanäle der aneinandergereihten Strahlungsquellen miteinander ausgerichtet und zu durchgehenden Strömungskanälen verbunden sind. Diese haben jeweils einen Anschluß zur Kühlfluid-Zuführung an einer ersten der gereihten Strahlungsquellen.

Eine derartige Bestrahlungsanordnung ist insbesondere zur NIR-Trocknung von Lacken oder Kunststoffbeschichtungen - speziell Pulverlacken -, zur Herstellung von Kunststofflaminaten oder zur thermischen Behandlung (speziell Trocknung und/oder Vernetzung) von Dünnschichtstrukturen, speziell auf thermisch empfindlichen Substraten im Bereich des Halbleiter- und Displaytechnologie, sowie bei weiteren Anwendungen einsetzbar, bei denen die Realisierung breiter Bestrahlungszonen mit nahezu ideal konstanter Strahlungsflußdichte eine hohe Produktivität des Verfahrens ergibt.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
- Fig. 1: einen Ausschnitt aus einer Bestrahlungsanordnung mit einer Strahlungsquelle gemäß einer ersten Ausführungsform der Erfindung in Art einer Längsschnittdarstellung,
- Fig. 2: einen Ausschnitt aus einer Bestrahlungsanordnung mit einer Strahlungsquelle gemäß einer zweiten Ausführungsform der Erfindung in Art einer Längsschnittdarstellung und
- Fig. 3: eine skizzenartige Darstellung der Ortsabhängigkeit der Strahlungsflußdichte in Längsrichtung der Bestrahlungsanordnungen nach Fig. 1 oder 2.

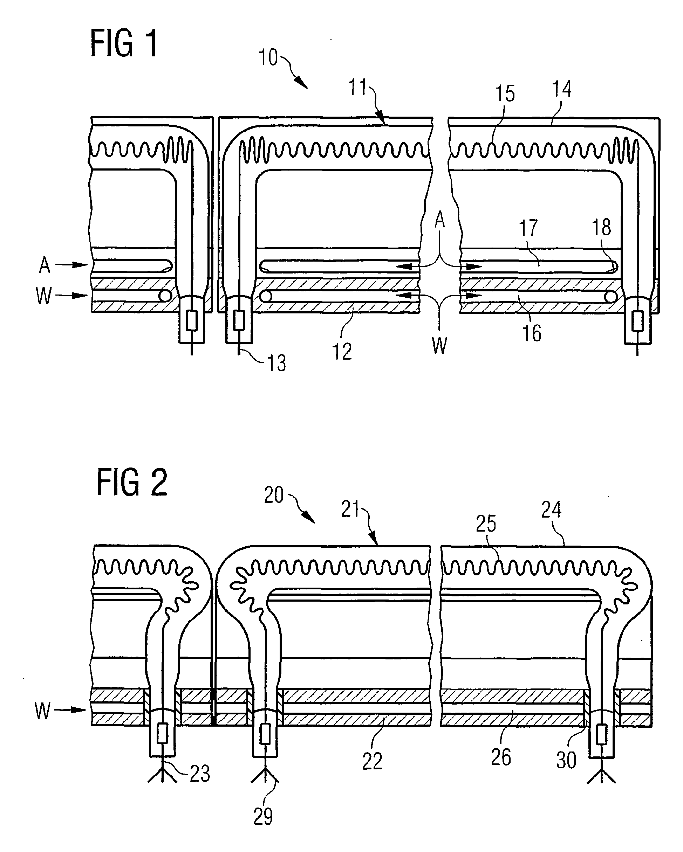

Fig. 1 zeigt einen Ausschnitt aus einer NIR-Bestrahlungsanordnung 10 für technologische Zwecke mit einer Mehrzahl von in Längsrichtung und in Ausrichtung miteinander aneinandergereihten Halogen-Glühfadenlampen 11 mit jeweils einem zugeordneten, langgestreckten Reflektor 12, der aus einem Al-Strangpreßprofil gefertigt ist.

Der grundsätzliche Aufbau des Reflektors ist an sich aus der EP 0 999 724 A2 der Anmelderin bekannt und wird daher hier nicht weiter erläutert. Nachfolgend wird lediglich auf spezielle Kühleinrichtungen Bezug genommen werden, die im Inneren oder in der Nähe des Reflektors angeordnet sind.

Wie aus der Figur zu ersehen ist, hat die Halogen-Glühfadenlampe 11 einen röhrenförmigen, an den beiden Enden jeweils einen Anschlußstift 13 aufweisenden Glaskörper 14, in dessen Zentrum eine langgestreckte Glühwendel 15 verläuft. Sie wird bei erhöhter Spannung und daher mit erhöhter Betriebstemperatur oberhalb von 2500 K, insbesondere oberhalb von 2900 K, betrieben und liefert daher Strahlung, deren wesentlicher Strahlungsanteil im Bereich des nahen Infrarot, speziell im Wellenlängenbereich zwischen 0,8 µm und 1,5 µm, liegt. Der Glaskörper 14 ist nahe seiner Enden annähernd rechtwinklig umgebogen derart, daß ein in etwa im rechten Winkel zu seinem Verlauf im mittleren Teil sich erstreckender Endabschnitt schließlich den jeweiligen Anschluß 13 trägt. Es ist auch zu erkennen, daß die Glühwendel 15 sich zu dem Bereich des "Abwinklung" hin zunehmend verdickt bzw. ihre Spiralstruktur dichter ausgeführt ist.

Durch die Umbiegung des Glaskörpers 14 zum Reflektor und dem jeweiligen Anschluß hin in Verbindung mit der verdickten bzw. verdichteten Ausführung der Glühwendel 15 wird erreicht, daß die Halogen-Glühfadenlampe 11 bis in ihre seitlichen Endbereiche hin eine im wesentlichen konstante Strahlungsflußdichte der NIR-Strahlung liefert.

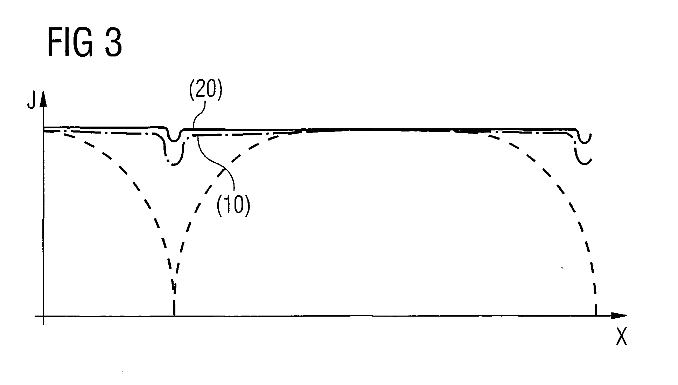

Hierzu wird auf Fig. 3 hingewiesen, in der der Strahlungsflußdichteverlauf zweier konventioneller, aneinander gereihter NIR-Lampen mit einer gestrichelten Linie bezeichnet ist, während die sich bei der Anordnung nach Fig. 1 ergebende Ortsabhängigkeit der Strahlungsflußdichte in Längsrichtung der Bestrahlungsanordnung 10 (schematisch) mit einer strichpunktierten Linie bezeichnet ist. Der vorgeschlagene Aufbau ermöglicht also eine Aneinanderreihung mehrerer Strahlungsquellen zur Bildung einer linear ausgedehnten Bestrahlungsanordnung ohne wesentliche Einbrüche in der Strahlungsflußdichte an den Stoßstellen.

Im Inneren des Reflektors 12 ist ein Kühlwasserkanal 16 zur Kühlung des Reflektors mit Kühlwasser W vorgesehen. Nahe der Reflektoroberfläche verläuft ein Preßluftröhrchen 17 mit Luftdüsen 18 nahe der die Anschlüsse tragenden Enden des Glaskörpers 14, durch die dieser Bereich des Glaskörpers mit kalter Preßluft A beaufschlagt wird. Durch diese Kühlung der Lampenenden wird - in Kombination mit dem Wärmeableitungsvermögen des massiven Metallreflektors - ein steiler T-Gradient verwirklicht. Dieser sichert, daß trotz Glaskörpertemperaturen oberhalb von 600°C eine für die Lebensdauer der Strahlungsquelle wichtige Enden-Temperatur um oder unterhalb von 200°C erreichbar wird.

Fig. 2 zeigt ein weiteres Ausführungsbeispiel einer Bestrahlungsanordnung 20, bei der zu Fig. 1 funktionsgleiche Komponenten auch mit an Fig. 1 angelehnten Bezugsziffern bezeichnet sind.

Es ist zu erkennen, daß der Reflektor 22 hier nur bis unterhalb der Mittenachse des Glaskörpers 24 bzw. der Glühwendel 25 reicht und - anders als bei der Anordnung 10 nach Fig. 1 - einen durch die aneinandergereihten Reflektoren 22 durchgehenden Kühlwasserkanal 26 aufweist.

Hinsichtlich der Halogen-Glühfadenlampe 21 besteht ein wesentlicher Unterschied in der geometrisch modifizierten Ausbildung der Umbiegung im Bereich der Lampenenden. Diese ist hier nämlich im wesentlichen C-förmig ausgeführt, womit erreicht wird, daß die Anschlüsse 23 gegenüber den äußersten Punkten des Glaskörpers 24 etwas nach innen versetzt sind. Dies ermöglicht zum einen das noch dichtere Aneinanderstoßen der Halogenlampen 21 und zum anderen das Vorsehen von relativ großflächigen Kühlflächen (Flags) 29 an den Anschlüssen 23. Zudem sind im Bereich des Durchführungen der Lampenenden durch den Reflektorkörper spannungsausgleichende und wärmeleitende Buchsen 30 vorgesehen, die für eine gute Wärmeübertragung an den Reflektorkörper sorgen.

Durch diese Maßnahmen zusammen wird - bei Verzicht auf Einrichtungen zu einer aktiven Druckluftkühlung - ebenfalls ein relativ steiler T-Gradient im Bereich der Lampenenden erreicht.

Durch die enge Aneinanderreihung der Halogenlampen, die mit der Ausbildung des Glaskörpers nach Fig. 2 möglich wird, in Verbindung mit der C-förmigen Ausformung der Umbiegungsbereiche wird eine sehr gute Konstanz der Strahlungsflußdichte im Längsverlauf von mehreren aneinanderstoßenden Strahlungsquellen möglich, wie die durchgezogene Linie in Fig. 3 (wiederum schematisch) zeigt. Dies gelingt bis zu einem gewissen Grade sogar ohne zusätzliche Verdickung bzw. Verdichtung der Glühwendel 25 in den Umbiegungsbereichen des Lampenkörpers.

Die Ausführung der Erfindung ist nicht auf die oben beschriebenen Beispiele und hervorgehobenen Aspekte beschränkt, sondern im Rahmen der Ansprüche ebenso in einer Vielzahl von Abwandlungen möglich, die im Rahmen fachgemäßen Handelns liegen.

### Bezugszeichenliste

- 10; 20: NIR-Bestrahlungsanordnung
- 11; 21: Halogen-Glühfadenlampe
- 12; 22: Reflektor
- 13; 23: Anschlußstift
- 14; 24: Glaskörper
- 15; 25: Glühwendel
- 16; 26: Kühlwasserkanal
- 17: Preßluftröhrchen
- 18: Luftdüse
- 29: Kühlfläche (Flag)
- 30: Buchse
- A: Preßluft
- W: Kühlwasser

## Patentansprüche

1. Strahlungsquelle (11; 21) für elektromagnetische Strahlung, deren wesentlicher Wirkanteil im Bereich des nahen Infrarot, insbesondere im Wellenlängenbereich zwischen 0,8 µm und 1,5 µm, liegt, zur Ausbildung einer langgestreckten Bestrahlungszone, mit einer langgestreckten Halogenlampe (11; 21), die einen röhrenförmigen, an den Enden gesockelten Glaskörper (14; 24) mit mindestens einer Glühwendel (15; 25) hat, und einem langgestrecktem Reflektor (12; 22), wobei Anschlüsse (13; 23) der Halogenlampe im Bereich der Reflektorfläche oder, bezogen auf die Position der Halogenlampe, hinter dieser angeordnet sind,
**dadurch gekennzeichnet, daß**
die Enden des Glaskörpers zum Reflektor hin umgebogen sind und
die oder mindestens eine Glühwendel im gebogenen Bereich des Glaskörpers verdickt oder verdichtet ausgeführt ist, derart, daß die Strahlungsflußdichte der Strahlungsquelle in deren Längsrichtung zwischen den äußersten Punkten der Sockel im wesentlichen konstant ist.

2. Strahlungsquelle nach Anspruch 1,
**dadurch gekennzeichnet, daß**
mindestens ein Ende des Glaskörpers (14) in Bezug auf dessen Längserstreckung über einen Krümmungsradius im wesentlichen rechteckig umgebogen ist.

3. Strahlungsquelle nach Anspruch 1 oder 2,
**dadurch gekennzeichnet, daß**
mindestens ein Ende des Glaskörpers (24) einen Bereich C-förmiger Biegung aufweist, derart, daß der äußerste Punkt des diesem Ende zugeordneten Anschluß (23) gegenüber dem äußersten Punkt des Glaskörpers (24) an diesem Ende geringfügig nach innen versetzt ist.

4. Strahlungsquelle nach einem der vorangehenden Ansprüche,
**dadurch gekennzeichnet, daß**
die Enden der Halogenlampe (11; 21) in wärmeleitendem Kontakt mit dem Reflektor (12; 22) angeordnet sind und/oder den Enden Kühlmittel (16, 17, 18; 26, 29, 30) zur Wärmeabführung zugeordnet sind derart, daß ein steiler T-Gradient zwischen den gebogenen Bereiches des Glaskörpers (14; 24) und dem jeweils benachbarten Anschluß (13; 23), insbesondere ein T-Abfall von einer Glaskörpertemperatur oberhalb von 600°C auf eine Sockel-Temperatur unterhalb von 300°C, speziell unterhalb von 200°C, erzeugt wird.

5. Strahlungsquelle nach Anspruch 4,
**dadurch gekennzeichnet, daß**
die Kühlmittel Wärmeabstrahlungsflächen (29) an den Enden der Halogenlampe (21) umfassen.

6. Strahlungsquelle nach Anspruch 4 oder 5,
**dadurch gekennzeichnet, daß**
die Kühlmittel Kühlfluid-Strömungskanäle (16, 17) zur Zuleitung eines unter Druck stehenden Kühlfluids zu den Enden bzw. endnahen Bereichen der Halogenlampe (11) und/oder den diesen benachbarten Bereichen des Reflektors (12) umfassen.

7. Strahlungsquelle nach Anspruch 6,
**gekennzeichnet durch**
mindestens einen Preßluft-Strömungskanal (17) im oder nahe dem Reflektor (12) mit auf die Enden des Glaskörpers gerichteten Austrittsöffnungen (18).

8. Strahlungsquelle nach Anspruch 7,
**gekennzeichnet durch**
eine Mehrzahl von Preßluft-Strömungskanälen (17) im Reflektor (12), die jeweils auf die Enden der Halogenlampe (11) gerichtete Austrittsöffnungen (18) aufweisen, wobei die Austrittsöffnungen derart angeordnet und ausgebildet sind, daß zugeführte Preßluft um die Enden bzw. endnahen Bereiche des Glaskörpers (14) der Halogenlampe verwirbelt wird.

9. Strahlungsquelle nach einem der Ansprüche 6 bis 8,
**gekennzeichnet durch**
Wasserkanäle (16; 26) im Reflektor (12; 22), die den Lampenenden benachbarte Bereiche desselben durchqueren.

10. Strahlungsquelle nach einem der vorangehenden Ansprüche,
**gekennzeichnet durch**
Steckkontakt-Sockel (23), denen Wärmeleitmittel (29) zur Wärmeabführung an den Reflektor (22) zugeordnet sind.

11. Strahlungsquelle nach einem der vorangehenden Ansprüche,
**dadurch gekennzeichnet, daß**
der Reflektor (22) als massives Strangpreßprofil aus einem Material mit hoher Wärmeleitfähigkeit, insbesondere Aluminium oder einer Aluminiumlegierung, ausgeführt ist.

12. Strahlungsquelle nach Anspruch 11 und einem der Ansprüche 6 bis 10,
**dadurch gekennzeichnet, daß**
in das Strangpreßprofil Kühlfluid-Strömungskanäle (26) eingepreßt sind.

13. Strahlungsquelle nach Anspruch 11 oder 12,
**dadurch gekennzeichnet, daß**
der Querschnitt der Außenkontur des Strangpreßprofils im wesentlichen rechteckig und der Querschnitt der Reflektorfläche im wesentlichen W-förmig ist, wobei insbesondere zwei oder drei Kühlfluid-Strömungskanäle im Fußbereich des "W" eingepreßt sind.

14. Bestrahlungsanordnung (10; 20) mit einer Mehrzahl von Strahlungsquellen (11; 21) nach einem der vorangehenden Ansprüche, wobei mindestens zwei der Strahlungsquellen auf einer Linie hintereinander angeordnet sind,
**dadurch gekennzeichnet, daß**
die Strahlungsflußdichte über die gesamte Längserstrekkung der aneinandergereihten Strahlungsquellen zwischen den voneinander abgewandten äußersten Punkten der ersten und letzten gereihten Strahlungsquelle im wesentlichen konstant ist.

15. Bestrahlungsanordnung nach Anspruch 14,
**dadurch gekennzeichnet, daß**
Kühlfluid-Strömungskanäle (16; 26) der aneinandergereihten Strahlungsquellen (11; 21) miteinander ausgerichtet und zu durchgehenden Strömungskanälen verbunden sind, die jeweils einen Anschluß (30) zur Kühlfluid-Zuführung an einer ersten der gereihten Strahlungsquellen haben.

## Claims

1. Radiation source (11; 21) for electromagnetic radiation whose essential active component lies in the near infrared range, in particular in the wavelength range between 0.8 µm and 1,5 µm, for the creation of an extended irradiation zone, with an extended halogen lamp (11; 21) that has a tubular glass body (14; 24) fitted in a socket at the ends, with at least one incandescent filament (15; 25), and one extended reflector (12; 22), wherein terminals (13; 23) of the halogen lamp are arranged in the area of the reflector surface or, referred to the position of the halogen lamp, behind it,
**characterised in that**,
the ends of the glass body are bent towards the reflector and the or at least one incandescent filament is thickened or condensed in the bent zone of the glass body such that the radiation flux density of the radiation source in its longitudinal direction is essentially constant between the outermost points of the socket.

2. Radiation source according to Claim 1,
**characterised in that**,
at least one end of the glass body (14) is bent in relation to its longitudinal extension in an essentially rectangular form over a curvature radius.

3. Radiation source according to Claim 1 or 2,
**characterised in that**,
at least one end of the glass body (24) has an area of C-shaped bend such that the outermost point of the terminal (23) assigned to this end is slightly offset towards the inside in comparison with the outermost point of the glass body (24) at this end.

4. Radiation source according to one of the previous claims,
**characterised in that**,
the ends of the halogen lamp (11; 21) are arranged in thermally conductive contact with the reflector (12; 22) and/or coolants (16, 17, 18; 26, 29, 30) are assigned to the ends for heat dissipation such that a steep T-gradient is created between the bent zone of the glass body (14; 24) and the neighbouring terminal (13; 23), in particular a temperature drop from a glass body temperature in excess of 600°C to a socket temperature below 300°C, especially under 200°C.

5. Radiation source according to Claim 4,
**characterised in that**,
the coolants embrace heat dissipation surfaces (29) at the ends of the halogen lamp (21).

6. Radiation source according to Claim 4 or 5,
**characterised in that**,
the coolants encompass cooling fluid flow ducts (16, 17) to feed a pressurised cooling fluid to the ends or the end zones of the halogen lamp (11) and/or the zones of the associated reflector (12) adjoining them.

7. Radiation source according to Claim 6,
**characterised by**
at least one compressed air flow duct (17) in or close to the reflector (12) with outlet openings (1() pointing to the ends of the glass body.

8. Radiation source according to Claim 7,
**characterised by**
a number of compressed air flow ducts (17) in the reflector (12), each of which have outlet openings (1() pointing towards the ends of the halogen lamp (11), wherein the outlet openings are arranged and shaped such that fed compressed air is eddied around the ends or end zones of the glass body (14) of the halogen lamp.

9. Radiation source according to one of the claims 6 to 8,
**characterised by**
water ducts (16; 26) in the reflector (12; 22) that pass through the zones adjoining its neighbouring zones.

10. Radiation source according to one of the previous claims,
**characterised by**
plug-in contact sockets (23) to which thermal conduction media (29) are assigned for heat dissipation to the reflector (22).

11. Radiation source according to one of the previous claims,
**characterised in that**,
the reflector (22) is realised as a solid extruded profile made of a material with a higher thermal conductivity, in particular aluminium or an aluminium alloy.

12. Radiation source according to Claim 11 one of the Claims 6 to 10,
**characterised in that**,
cooling fluid flow ducts (26) are pressed into the extruded profile.

13. Radiation source according to Claim 11 or 12,
**characterised in that**,
the cross-section of the extruded profile's outer contour is essentially rectangular and the cross-section of the reflector surface is essentially W-shaped, wherein in particular two or three cooling fluid flow ducts are pressed into the foot zone of the "W".

14. Irradiating arrangement (10; 20) with a number of radiation sources (11; 21) according to one of the previous claims, wherein at least two of the radiation sources are placed one behind the other in a line,
**characterised in that**,
the radiation flux density over the entire longitudinal extension of the lined-up radiation sources between the outermost points of the first and last lined-up radiation sources is essentially constant.

15. Irradiating arrangement according to Claim 14,
**characterised in that**,
cooling fluid flow ducts (16; 26) of the lined-up radiation sources (11; 21) are aligned to one another and linked to continuous flow ducts that each have a connection (30) to the cooling fluid supply on a first of the lined-up radiation sources.

## Revendications

1. Source de rayonnement (11 ; 21) pour un rayonnement électromagnétique dont la composante active essentielle se situe dans la plage de l'infrarouge proche, notamment dans la plage des longueurs d'ondes située entre 0,8 µm et 1,5 µm, pour constituer une zone de rayonnement étirée en longueur, avec une lampe à halogène étirée en longueur (11 ; 21) qui dispose d'un corps en verre en forme de tube (14 ; 24) muni d'un socle sur les extrémités et comprenant au moins un filament boudiné incandescent (15 ; 25) et avec un réflecteur étiré en longueur (12 ; 22), alors que des points de connexion (13 ; 23) de la lampe à halogène sont disposés dans la zone de la surface du réflecteur ou, par rapport à la position de la lampe à halogène, derrière celle-ci, **caractérisée en ce que** les extrémités du corps en verre sont coudées en direction du réflecteur et **en ce que** les filaments boudinés incandescents, ou au moins un filament boudiné incandescent, sont réalisés avec un épaississement ou une densification dans la zone arrondie du corps en verre, et ceci de telle façon qu'entre les points les plus extrêmes des socles, la densité du flux de rayonnement de la source de rayonnement soit sensiblement constante dans la direction longitudinale de celle-ci.

2. Source de rayonnement selon la revendication 1, **caractérisée en ce que**, sur l'étendue d'un rayon de courbure, au moins une extrémité du corps en verre (14) est repliée sensiblement à angle droit par rapport à son extension longitudinale.

3. Source de rayonnement selon la revendication 1 ou 2, **caractérisée en ce qu'**au moins une extrémité du corps en verre (24) comprend une zone avec une courbure en forme de C telle que le point le plus extrême du point de raccordement (23) associé à cette extrémité soit à cette même extrémité légèrement décalée vers l'intérieur par rapport au point le plus extrême du corps en verre (24).

4. Source de rayonnement selon l'une quelconque des revendications précédentes, **caractérisée en ce que** les extrémités de la lampe à halogène (11 ; 21) sont disposées en contact de conduction thermique avec le réflecteur (12 ; 22) et/ou **en ce qu'**aux extrémités sont associés des moyens de refroidissement (16, 17, 18 ; 26, 29, 30) pour l'évacuation de la chaleur, et ceci de façon à obtenir un gradient de température abrupt entre les zones coudées du corps en verre (14 ; 24) et le point de raccordement respectivement voisin (13 ; 23), en particulier une chute de température depuis une température du corps en verre supérieure à 600°C jusqu'à une température du socle inférieure à 300°C, particulièrement inférieure à 200°C.

5. Source de rayonnement selon la revendication 4, **caractérisée en ce que** les moyens de refroidissement comprennent aux extrémités de la lampe à halogène (21) des surfaces de rayonnement thermique (29).

6. Source de rayonnement selon la revendication 4 ou 5, **caractérisée en ce que** les moyens de refroidissement comprennent des canaux d'écoulement du fluide de refroidissement (16, 17) servant à amener un fluide de refroidissement sous pression vers les extrémités ou vers les zones proches des extrémités de la lampe à halogène (11) et/ou vers les zones du réflecteur (12) proches de celle-ci.

7. Source de rayonnement selon la revendication 6, **caractérisée par** au moins un canal d'écoulement d'air comprimé (17) qui se trouve dans le réflecteur (12) ou à proximité de celui-ci et qui comprend des ouvertures de sortie (18) dirigées vers les extrémités du corps en verre.

8. Source de rayonnement selon la revendication 7, **caractérisée par** une pluralité de canaux d'écoulement d'air comprimé (17) qui se trouvent dans le réflecteur (12) et qui comprennent des ouvertures de sortie (18) respectivement dirigées vers les extrémités de la lampe à halogène (11), les ouvertures de sortie étant disposées et configurées de telle façon que l'air comprimé amené soit soumis à un tourbillon autour des extrémités du corps en verre (14) de la lampe à halogène ou autour des zones qui sont proches de ces extrémités.

9. Source de rayonnement selon l'une quelconque des revendications 6 à 8, **caractérisée par** des canaux à eau (16 ; 26) qui se trouvent dans le réflecteur (12 ; 22) et qui traversent les zones de celui-ci qui sont proches des extrémités de la lampe.

10. Source de rayonnement selon l'une quelconque des revendications précédentes, **caractérisée par** des socles de contacts enfichables (23) auxquels sont associés des moyens de conduction thermique (29) pour l'évacuation de la chaleur vers le réflecteur (22).

11. Source de rayonnement selon l'une quelconque des revendications précédentes, **caractérisée en ce que** le réflecteur (22) est réalisé en tant que profilé extrudé massif en un matériau à haute conductibilité thermique, en particulier de l'aluminium ou un alliage d'aluminium.

12. Source de rayonnement selon la revendication 11 et selon l'une quelconque des revendications 6 à 10, **caractérisée en ce que** des canaux d'écoulement du fluide de refroidissement (26) sont intégrés par pression dans le profilé extrudé.

13. Source de rayonnement selon la revendication 11 ou 12, **caractérisée en ce que** la section du contour extérieur du profilé extrudé est sensiblement rectangulaire et **en ce que** la section de la surface du réflecteur a sensiblement la forme d'un W, alors qu'en particulier deux ou trois canaux d'écoulement du fluide de refroidissement sont intégrés par pression dans la zone du pied du « W ».

14. Dispositif d'irradiation (10 ; 20) avec une pluralité de sources de rayonnement (11 ; 21) selon l'une quelconque des revendications précédentes, au moins deux des sources de rayonnement étant disposées l'une derrière l'autre sur une ligne, **caractérisé en ce qu'**entre les points les plus extrêmes opposés l'un à l'autre de la première et de la dernière source de rayonnement disposées l'une derrière l'autre, la densité du flux de rayonnement est sensiblement constante sur la totalité de l'extension en longueur des sources de rayonnement disposées l'une derrière l'autre.

15. Dispositif d'irradiation selon la revendication 14, **caractérisé en ce que** des canaux d'écoulement du fluide de refroidissement (16 ; 26) des sources de rayonnement disposées l'une derrière l'autre (11 ; 21) sont alignés entre eux et sont reliés pour former des canaux d'écoulement continus qui sont munis respectivement d'un raccord (30) pour amener le fluide de refroidissement sur une première des sources de rayonnement disposées l'une derrière l'autre.
